# EUROPEAN PATENT APPLICATION

(11) **EP 3 573 002 A1**
(43) Date of publication of application: **27.11.2019**
(21) Application number: 19176478.6
(22) Date of filing: 24.05.2019
(51) Int. Cl.: G06Q 20/38, G06Q 20/32

(54) **A SECURE ELEMENT TO PROTECT TRANSACTIONS MADE BY OR WITHIN A VEHICLE**

(30) Priority: 24.05.2018 US 201815988631
(71) Applicant: Capital One Services, LLC, McLean, Virginia 22102 (US)
(72) Inventor: KOEPPEL, Adam, Washington DC, DC District of Columbia 20010 (US); LOCKE, Tyler, Washington, DC District of Columbia 20002 (US); PERRY, Robert, Asburn, VA Virginia 20147 (US)
(74) Representative: Müller-Boré & Partner Patentanwälte PartG mbB

(57) **Abstract**

A device associated with a vehicle may receive a device identifier of a user device that is registered to an authorized user or user identification data associated with the authorized user. The device may include a secure element, and may receive, from an infotainment system, payment information associated with a transaction for a service. The device may secure the payment information using an encryption technique that is to use a public key associated with the device identifier or the user identification data to encrypt the payment information. The device may provide the payment information to the infotainment system, which may provide the payment information to another device that is associated with an organization providing the particular service. The other device may use a private key to decrypt the payment information, process the payment information, and may perform actions relating to the service based on the payment information being successfully processed.

## Description

### BACKGROUND

Parking is the act of stopping and disengaging a vehicle and leaving it unoccupied. In some instances, parking a vehicle requires payment of a fee (e.g., a fixed fee, a fee based on a time period the vehicle is parked, etc.). Vehicle operators may pay for parking with coins, credit cards, and/or mobile applications tied to a transaction card and/or a transaction account.

### SUMMARY

According to some possible implementations, a device associated with a vehicle may include one or more memories that are communicatively coupled to one or more processors. The one or more processors may receive, from an infotainment system, a device identifier capable of being used to identify a user device that is registered to an authorized user or user identification data capable of being used to identify the authorized user. The one or more processors may receive, from the infotainment system, payment information associated with a transaction for a particular service. The one or more processors may secure the payment information using an encryption technique that is to use a public key that is associated with the device identifier to encrypt the payment information or that is to use the public key that is associated with the user identification data to encrypt the payment information. The one or more processors may provide the payment information that has been encrypted to the infotainment system to cause the infotainment system to provide the payment information to a device associated with an organization providing the particular service. The device associated with the organization providing the particular service may use a private key to decrypt the payment information. The device associated with the organization providing the particular service may process the payment information that has been decrypted. The device associated with the organization providing the particular service may perform one or more actions relating to the particular service based on the payment information being successfully processed.

According to some possible implementations, a non-transitory computer-readable medium may store one or more instructions that, when executed by one or more processors, cause the one or more processors to receive a device identifier capable of being used to identify a user device that is registered to an authorized user and/or user identification data capable of being used to identify the authorized user. The one or more instructions may cause the one or more processors to receive payment information associated with a transaction for a particular service. The one or more instructions may cause the one or more processors to authenticate the device identifier and/or the user identification data after receiving the payment information. The one or more instructions may cause the one or more processors to secure the payment information using an encryption technique that is to use a public key that is associated with the device identifier and/or the user identification data to encrypt the payment information. The one or more instructions may cause the one or more processors to provide the payment information that has been encrypted to a device associated with an organization providing the particular service. The device associated with the organization providing the particular service may use a private key to decrypt the payment information. The device associated with the organization providing the particular service may process the payment information that has been decrypted. The device associated with the organization providing the particular service may perform one or more actions relating to the particular service based on the payment information being successfully processed.

According to some possible implementations, a method may include receiving, by a device associated with a vehicle, a device identifier capable of being used to identify a user device that is registered to an authorized user or user identification data capable of being used to identify the authorized user. The device may include a secure element that is capable of securing transactions. The method may include receiving, by the device and from an infotainment system, payment information associated with a transaction for a particular service. The method may include securing, by the device, the payment information using an encryption technique that is to use a public key that is associated with the device identifier to encrypt the payment information or that is to use the public key that is associated with the user identification data to encrypt the payment information. The method may include providing, by the device, the payment information that has been encrypted to the infotainment system associated with the vehicle to cause the infotainment system to provide the payment information to a device associated with the organization providing the particular service. The device associated with the organization providing the particular service may use a private key to decrypt the payment information. The device associated with the organization providing the particular service may process the payment information that has been decrypted. The device associated with the organization providing the particular service may perform one or more actions relating to the particular service based on the payment information being successfully processed.

### BRIEF DESCRIPTION OF THE DRAWINGS

Figs. 1A-1C are diagrams of an overview of an example implementation described herein;
Figs. 2A-2C are diagrams of an overview of another example implementation described herein;
Fig. 3 is a diagram of an example environment in which systems and/or methods, described herein, may be implemented;
Fig. 4 is a diagram of example components of one or more devices of Fig. 3; and
Fig. 5 is a flow chart of an example process for using a secure element affixed to a vehicle to secure transactions that are made within the vehicle.

### DETAILED DESCRIPTION

The following detailed description of example implementations refers to the accompanying drawings. The same reference numbers in different drawings may identify the same or similar elements.

Current methods of paying for parking may be cumbersome and impractical. For example, paying for parking with coins or money requires a vehicle operator to have sufficient money and/or specific types of coins to pay for the parking. Utilizing a credit card and/or a debit card to pay for parking requires the vehicle operator have a credit card and/or a debit card on hand to pay for the parking. Paying for parking with a mobile application requires the parking meter or the parking garage to support the mobile application and to receive payment via the mobile application.

In some cases, a user may use an in-vehicle infotainment system to pay for parking. For example, a user may interact with an interface on the vehicle's dashboard to input payment information, and the infotainment system may communicate with an external vendor application to execute the payment.

However, performing payment-related transactions using an infotainment system causes significant security issues. For example, while a user is sending payment information from the infotainment system to a vendor's server, a hacker may intercept the payment information and use the payment information to perform fraudulent transactions. Additionally, or alternatively, an unauthorized user may enter a vehicle that is left unlocked, and may interact with the infotainment system to identify payment information which may be stored within the infotainment system.

Some implementations described herein provide a vehicle that includes an infotainment system and/or a secure element to protect payment information that is to be used to pay for a parking service. For example, the driver may interact with an interface of the infotainment system (e.g., a screen on the vehicle's dashboard) to open a parking application hosted by a merchant, and may input or select payment information that is needed to pay for parking. Additionally, because multiple users may be registered to the vehicle, the infotainment system may determine which user is within the vehicle by using a personal area network connection (PAN), such as a Bluetooth connection, to scan and detect the user device of the driver. In this case, the infotainment system may use the PAN connection to obtain a device identifier of the user device. Next, the infotainment system may provide, to the secure element, the device identifier, the payment information, and a merchant identifier associated with an organization providing the parking service.

Additionally, the secure element may identify a public key associated with the device identifier and/or the merchant identifier, and may use the public key to encrypt the payment information. Furthermore, the secure element may provide the encrypted payment information to the infotainment system, and the infotainment system may provide the encrypted payment information to a merchant terminal. In this case, the merchant terminal may be configured with a private key, and may decrypt the payment information using the private key. Moreover, the merchant terminal may process the payment information, may provide a receipt for display on the interface of the infotainment system, and may open a parking gate to allow the vehicle to exit a parking area.

In this way, the secure element is able to provide security to in-vehicle payments that allow the user to pay for a service without the user needing to have cash on hand, a transaction card (e.g., a credit card, a debit card), and/or the like. In some cases, the secure element may be located within the vehicle in a location that is not visible to users sitting inside the vehicle. This further reduces a likelihood of the secure element being tampered with and further proves security. Additionally, use of the secure element eliminates a need for merchant servers to devote resources to implement their own data security measures, conserves processing resources that might otherwise be used to perform fraudulent transactions and/or resolve fraudulent transactions, and/or the like. Moreover, automation of several different stages of the process of paying for parking may remove human subjectivity and waste from the process, which may improve speed and efficiency of the process while conserving computing resources (e.g., processing resources, memory resources, and/or the like).

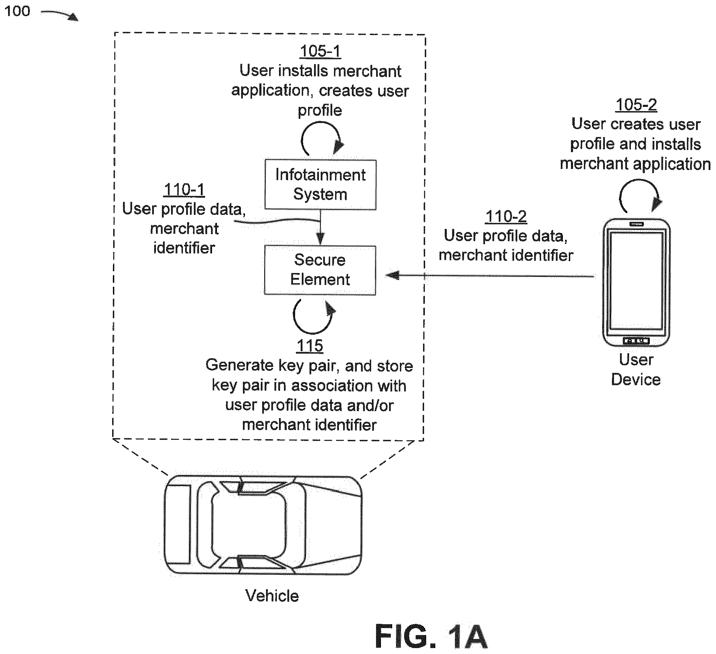

Figs. 1A-1C are diagrams of an overview of an example implementation 100 described herein. For example, example implementation 100 may include a vehicle with a secure element and an infotainment system that interact with each other to orchestrate secure in-vehicle payment for parking.

As shown in Fig. 1A, the vehicle may include the secure element and the infotainment system. For example, when the vehicle is manufactured, the secure element may be installed within the vehicle. In some implementations, the secure element may be installed in a location that is not visible to the driver or to passengers within the vehicle. In some implementations, the secure element may be installed onto a vehicle that was manufactured without a secure element (e.g., using a dongle or a similar device). In some implementations, the secure element may be a hardware device or part of a hardware device. For example, the secure element may be affixed to the vehicle in a location that is physically not visible to passengers sitting in the vehicle. In some implementations, the secure element may be part of software and/or implemented as software (e.g. relying on on-board hardware components). For example, the secure element may be installed and/or stored in a manner such that it is not visible to passengers sitting in the vehicle (e.g. protected and/or not displayed, e.g. using an access control). In some implementations, one or more software elements of the secure element may be hosted by processors that are part of a hardware component that is separate from hardware components of the infotainment system. For example, the hardware component may be a device that is located as part of an in-vehicle dashboard (e.g., that is physically placed behind the dashboard), and/or may be located in any physical location where the device is capable of fitting within the vehicle. Additionally, or alternatively, and provided as another example, the hardware component may be a dongle that may be placed anywhere within the vehicle. In some cases, the hardware component may be located in a secure location that is not visible to passengers within the vehicle. Additionally, or alternatively, one or more software components of the secure element may be hosted by processors that are part of the infotainment system.

The secure element may include one or more tamper-resistant processors that are capable of securely hosting applications and cryptographic data. For example, the secure element may be capable of receiving, generating, storing, and/or providing public keys capable of encrypting payment information, private keys capable of decrypting the payment information, user identification data capable of authenticating authorized users (e.g., biometric data, data relating to a valid form of user identification (ID), etc.), and/or the like. While some implementations described herein describe the secure element as being (e.g. physically) attached to the vehicle and separate from the infotainment system, it is to be understood that the secure element may be included as part of the infotainment system, may be included as part of a user device (e.g., a mobile device, a tablet, etc.), and/or may be included as part of any other device associated with the vehicle.

As shown by reference number 105-1, a user may interact with an interface of the infotainment (e.g., a screen on the vehicle's dashboard) to install a merchant application and to create a user profile. For example, the infotainment system may support a merchant application, such as a parking application, that allows the user to pay for parking and identify available parking spaces. Additionally, or alternatively, a merchant application may be installed onto the infotainment system that allows the user to pay for other services, such as a service to fuel up the vehicle, a vehicle repair service, a drive-through food service, and/or the like.

In some implementations, the user may use the merchant application to create a user profile. For example, the user may create a user profile within the merchant application to allow the user to use the merchant application to pay for services. The user profile may include personal information of the user, device information of one or more user devices associated with the user (e.g., a device identifier of a user device, such as a smartphone), payment information for the user (e.g., a transaction card identifier, an account identifier, etc.), and/or the like.

In some implementations, separate from the merchant application, the user may install a universal application that manages the user's payments for all merchant services. For example, the user may install a universal application that allows the user to create a profile with payment information that may be used for all merchant applications.

In some implementations, the merchant application and/or the universal application may be installed onto the user device, and the user device may be used to create the user profile (instead of the infotainment system). For example, as shown by reference number 105-2, the user may interact with an interface of the user device to create the user profile.

As shown by reference number 110-1, the infotainment system may provide the user profile data and/or a merchant identifier associated with the merchant application to the secure element. For example, the infotainment system may use a communication interface, such as a controller area network (CAN) bus interface to provide the user profile data and/or the merchant identifier to the secure element. As shown by reference number 110-2, the user device may provide the user profile data and/or the merchant identifier to the secure element.

As shown by reference number 115, the secure element may generate and store a key pair (e.g., a public key and a private key) in association with the user profile data and/or the merchant identifier. For example, the secure element may generate a public key that includes logic that may be used to encrypt payment information (e.g., transform payment information into a sequence of random numbers or characters that are only able to be retransformed into the payment information with a private key), as described further herein.

Additionally, the secure element may generate a private key that may be used to decrypt parking information and/or payment information that is encrypted by the public key. For example, the secure element may generate a private key that is able to transform encrypted payment information (e.g., a random series of numbers and characters) into payment information that is able to be processed. In this case, the secure element may provide the private key to the infotainment system, and the infotainment system may provide the private key to a parking server or a device associated with the organization providing the parking service. Additionally, the infotainment system may provide the private key using a secure channel. For example, the infotainment system may provide the private key to the parking server after protecting the private key with a secure shell (SSH) protocol, by providing parts of the private key to the infotainment system at different times and/or using different mediums, and/or the like.

In some implementations, a device other than the secure element may generate the key pair. For example, a provisioning server may be used to generate the key pair, the infotainment system may be used to generate the key pair, the user device may be used to generate the key pair, and/or the like.

In some implementations, the secure element may use a data structure to store the key pair in association with the user profile data and/or the merchant identifier. In some implementations, the data structure may store just the private key in association with the user profile data and/or the merchant identifier. In this way, the secure element is able to establish an association between the key pair and the user profile data to identify a particular user that is seeking to make a payment. Furthermore, the secure element is able to establish an association between the key pair and the merchant identifier to identify a particular merchant application that that user is using to make the payment.

In this way, the secure element is able to store the public key and/or the private key in association with user profile data for the user and the merchant identifier for the parking merchant.

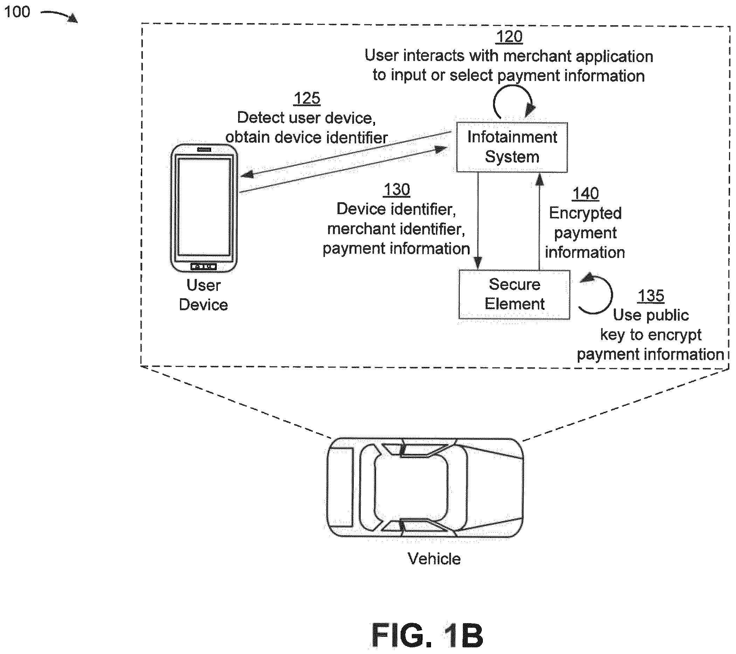

As shown in Fig. 1B, and by reference number 120, the user may use the interface of the infotainment system to interact with the merchant application to input or select payment information needed to pay for parking. For example, assume the user has driven the vehicle into a parking space of a parking garage, and that the user is trying to leave the parking garage. In this case, when the user gets into the vehicle, the user may interact with the merchant application via the interface of the infotainment system to input or select payment information needed to pay for parking. As a particular example, the user may scan a parking ticket using the merchant application, which may present the user with a balance owed. As another example, the user may input a parking ticket number, which may present the user with the balanced owed. In each case, the user may select previously entered payment information or may add payment information that may be used to pay the balance.

As shown by reference number 125, the infotainment system may detect that the user device is near or within the vehicle, and may provide a request to the user device to obtain the device identifier associated with the user device. For example, the infotainment system may scan the vehicle, or a geographic area associated with the vehicle, to determine whether the user device is near or within the vehicle. The infotainment system may scan the vehicle using a scanning technique, such as a Bluetooth scan, that is able to identify devices that are using a personal area network (PAN) to broadcast a signal within the PAN.

Additionally, after detecting the user device, the infotainment system may provide the request to the user device to obtain the device identifier. For example, the infotainment system may provide the request using the PAN, using an application programming interface (API), and/or the like, which may cause the user device to provide the device identifier to the infotainment system.

In some implementations, the infotainment system may be required to provide a security code with the device identifier. For example, to provide additional security, the user device may be configured with a security code that may only be provided to the infotainment system if the user device is utilizing a secure login mechanism (e.g., a password needed to unlock a phone, a fingerprint scan to unlock the phone, etc.). In this case, the user device may support an application that, upon receiving the request for the security code, can scan the user device to determine whether the user device is currently utilizing a secure login mechanism. This ensures that even if the user leaves his or her user device (e.g., smartphone) in the vehicle, and an unauthorized user breaks into the vehicle, that the unauthorized user will be unable to unlock the user device and therefore unable to provide the infotainment system with the security code (e.g., which may be needed to make payments, to view non-encrypted payment information, etc.).

In some implementations, the user device may be configured to automatically provide the device identifier to the infotainment system. For example, the user device may be configured to automatically provide the device identifier if the user device has Bluetooth enabled and is in range of the infotainment system.

In some implementations, the infotainment system may detect multiple user devices, and may intelligently select a particular user device. For example, if the user wants the driver of the vehicle to be charged, the infotainment system may be configured with a rule that allows the infotainment system to identify a geographic location of the multiple user devices, and to select the user device that is closest to the driver's seat of the vehicle. In some cases, the infotainment system may be configured with a different location (e.g., a location associated with the vehicle's dashboard, a location associated with a passenger seat, etc.), and/or the like. In other cases, the infotainment system may select a user device using a priority list (e.g., the vehicle may be configured to first select a phone associated with a parent before select a phone associated with a child).

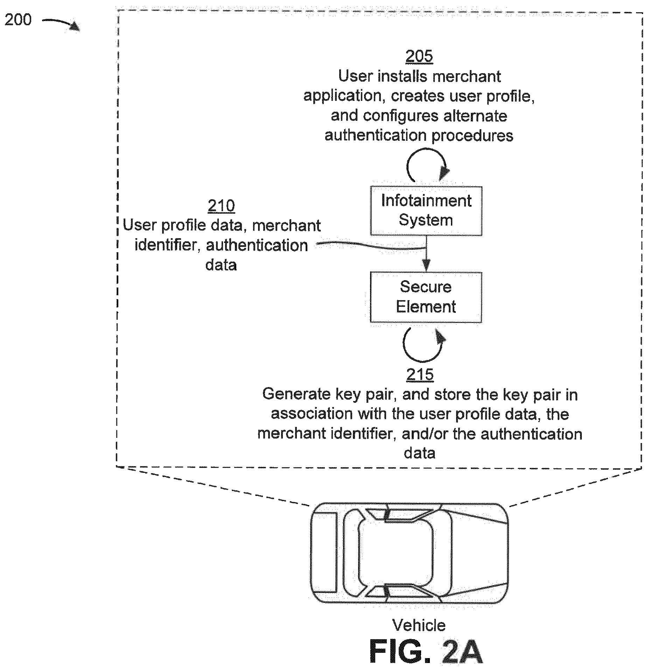

In some implementations, the infotainment system may not detect any user devices. In this case, the user device may utilize an alternate authentication procedure, as described in Figs. 2A-2C. In other cases, the user may be required to make a manual in-person payment for the parking.

As shown by reference number 130, the infotainment system may provide the device identifier, the merchant identifier, and/or the payment information to the secure element. As shown by reference number 135, the secure element may use the public key to encrypt the payment information. In some cases, the secure element may encrypt the payment information as part of a Diffie-Hellman key exchange, a digital signature algorithm (DSA), a key serialization technique, and/or a similar type of asymmetric cryptography. In the case where the security code is provided, the secure element may, prior to encrypting the payment information, authenticate the security code by determining whether the security code matches a provisioned copy of the security code. As shown by reference number 140, the secure element may provide the encrypted payment information to the infotainment system. For the key pair generation, any suitable method may be used as part of a Diffie-hellman key exchange, a digital signature algorithm (dsa), a key serialization technique, and/or a similar type of asymmetric cryptography. In some implementations, methods of key generation may be used in the above-stated techniques such as random number generation (RNG), pseudo random number generation (PRNG), and/or using configured integer values as keys.

In this way, the secure element is able to use the public key to encrypt the payment information, thereby allowing the payment information to be securely transmitted to a parking server or a device associated with the organization providing the parking service.

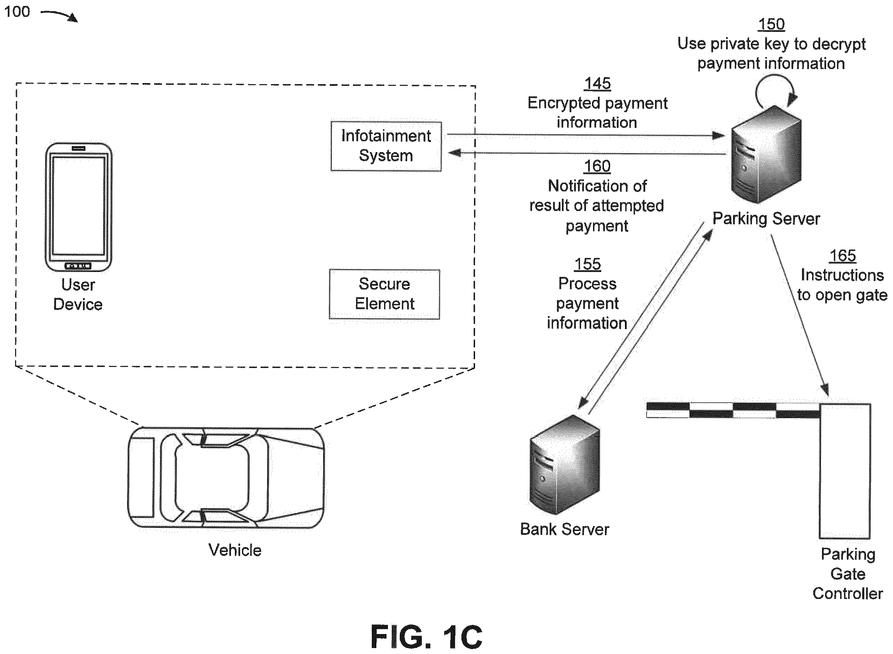

As shown in Fig. 1C, and by reference number 145, the infotainment system may provide the encrypted payment information to the parking server. The parking server may be a device associated with the organization providing the parking service, and may be capable of decrypting and processing the payment information, as described below.

As shown by reference number 150, the parking server may use a private key to decrypt the payment information. For example, as described above in connection with Fig. 1A, the private key may be provisioned to the parking server using a secure channel. In this case, when the parking server receives the encrypted payment information, the parking server may use the private key to decrypt the payment information. In some cases, the parking server may decrypt the payment information as part of a Diffie-Hellman key exchange, a digital signature algorithm (DSA), a key serialization technique, and/or a similar type of asymmetric cryptography.

In some implementations, the parking server may also receive non-encrypted information that may be used to identify the user device and/or the authorized user. For example, if the parking server stores private keys for multiple authorized users, the parking server may need to receive non-encrypted information identifying a particular authorized user, such that the parking server is able to determine which private key to use for the decryption.

As shown by reference number 155, the parking server may process the payment information by interacting with a bank server. If the payment is successful, the bank server may provide an indication to the parking server that the payment succeeded. If the payment is unsuccessful, the bank server may provide an indication to the parking server that the payment failed.

As shown by reference number 160, the parking server may provide, to the infotainment system, a notification of a result of the attempted payment. As shown by reference number 165, if the payment succeeds, the parking server may provide instructions to a parking gate controller to cause the parking gate controller to open a gate of the parking area. For example, there may be a sensor associated with the parking gate that is able to capture the vehicle's license plate. In this case, the vehicle license plate data may be used to verify that the vehicle at the parking gate is in fact the vehicle that has paid for parking. In other cases, the user may be required to scan a parking ticket while the vehicle is idle in front of the parking gate (prior to payment), in which case the parking server may instruct the parking gate controller to open the parking gate without a need for a sensor to identify the vehicle.

In this way, the secure element permits secure in-vehicle payments, without the user needing to have cash on hand, a transaction card, and/or the like. Furthermore, the physical location of the secure element provides additional security. For example, by installing the secure element in a location of the vehicle that is not visible to individuals within the vehicle, the secure element is less likely to be tampered with by unauthorized users. Additionally, by utilizing a secure element that is not included in the user device or the infotainment system, the secure element does not need to have access to public networks, such as the Internet, which reduces a likelihood of an unauthorized user using the public network to access and tamper with the secure element.

As indicated above, Figs. 1A-1C are provided merely as an example. Other examples are possible and may differ from what was described with regard to Figs. 1A-1C. For example, there may be additional devices and/or networks, fewer devices and/or networks, different devices and/or networks, or differently arranged devices and/or networks than those shown in Figs. 1A-1C. Furthermore, two or more devices shown in Figs. 1A-1C may be implemented within a single device, or a single device shown in Figs. 1A-1C may be implemented as multiple, distributed devices. Additionally, or alternatively, a set of devices (e.g., one or more devices) of example implementation 100 may perform one or more functions described as being performed by another set of devices of example implementation 100.

As an example, one or more implementations, described herein as being performed by the infotainment system, may be performed by the secure element. As another example, one or more implementations, described herein as being performed by the secure element, may be performed by the infotainment system. As another example, one or more implementations, described herein as being performed by the infotainment system or by the secure element, may be performed by a device that includes both the infotainment system and the secure element. As another example, one or more implementations, described herein as being performed by the infotainment system and/or the secure element, may be performed by the user device.

Figs. 2A-2C are diagrams of an overview of an example implementation 200 described herein. For example, example implementation 200 may include a vehicle with a secure element and an infotainment system that interact with each other to orchestrate secure in-vehicle payment for parking. Additionally, example implementation 200 shows that alternate authentication procedures may be deployed to provide additional security to the in-vehicle payments.

As shown in Fig. 2A, and by reference number 205, a user may install a merchant application (e.g., a parking application), create a user profile, and configure one or more alternate authentication procedures. For example, the user may interact with an interface of the infotainment to install the merchant application and to create the user profile, as described in detail in Fig. 1A.

Additionally, the user may be prompted to set up one or more alternate authentication procedures that may be used to provide additional security to in-vehicle payment transactions. For example, Figs. 1A-1C describe a process for securing payment information that requires the user device to be within the vehicle. However, in some cases, a user may not have the user device within the vehicle (e.g., a user may forget to bring their mobile phone with them when they get into the vehicle). In this case, one or more alternate authentication procedures may be configured to allow the user to secure payment information without having the user device within the vehicle.

In some implementations, the merchant application or the universal application that manages the user's payments for all merchant services may be used to set up a first authentication procedure that is capable of presenting the user with authentication questions. For example, the first authentication procedure may allow the user to input (e.g., via the interface of infotainment system) or select authentication questions, and to input responses to the authentication questions. In this way, the authentication questions may be provided for display on the interface of the infotainment system as a form of authentication for situations where the user does not bring the user device into the vehicle.

Additionally, or alternatively, the merchant application or the universal application that manages the group of merchant applications may be used to set up a second authentication procedure that is capable of identifying the user. For example, the second authentication procedure may allow the user to set up one or more forms of user identification, which may be verified in real-time to identify the user in situations where the user did not bring the user device into the vehicle.

As an example, the user may place a finger on the interface of the infotainment system to allow the infotainment system to capture the user's fingerprint, which may be used to identify the user in situations where the user does not bring the user device into the vehicle. As another example, the user may look at the interface of the infotainment system to allow the infotainment system to take a retinal scan of the one or both of the user's eyes, which may be used to identify the user.

As another example, the user may look at the interface of the infotainment system to allow the infotainment system to take a picture of the user, and the picture of the user may be used to identify the user. As another example, the user may provide a voice sample to the infotainment system (e.g., via a microphone of the infotainment system) to allow the infotainment system to capture the voice of the user, and the voice sample of the user may be used to identify the user. As another example, the user may place a valid form of identification (e.g., a driver's license) up to the interface of the infotainment system, which may allow the infotainment system to scan or take a picture of the valid form of identification, which may be used to identify the user.

As shown by reference number 210, the infotainment system may provide, to the secure element, the user profile data, the merchant identifier, and/or the authentication data associated with the authentication procedures. The authentication data may include data identifying the fingerprint of the user, data identifying one or both eyes of the user, data identifying the face of the user, data relating to the valid form of user identification, and/or the like.

As shown by reference number 215, the secure element may generate and store a key pair in association with the user profile data, the merchant identifier, and/or the authentication data, in a manner similar to that described in Fig. 1A.

In this way, the secure element is able to use the associations between the public key and the other types of data to secure payment information used for in-vehicle payments.

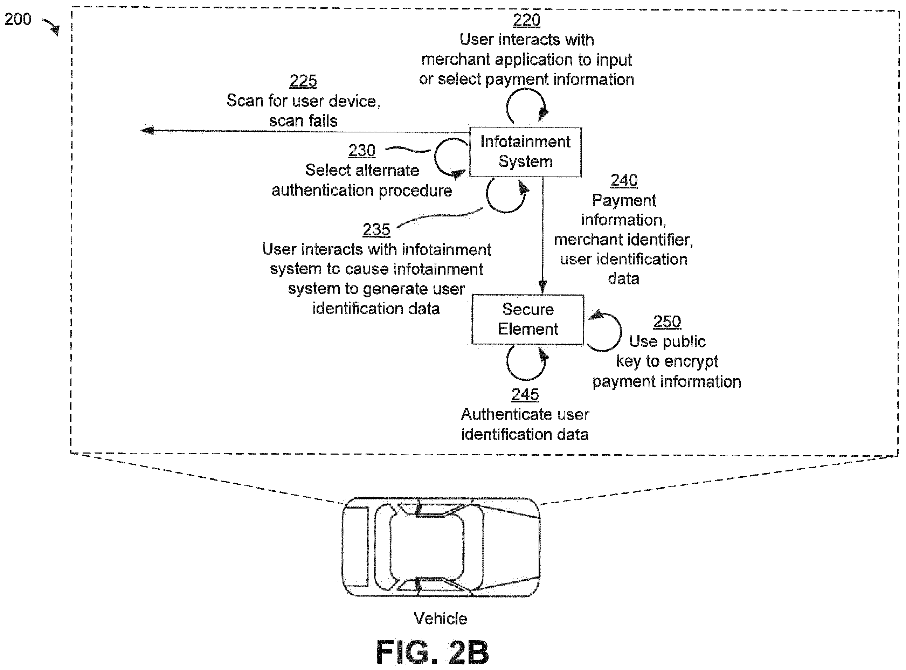

As shown in Fig. 2B, and by reference number 220, the user may interact with the merchant application to input or select payment information. As shown by reference number 225, the infotainment system may use a scanning technique (e.g., a Bluetooth scan) to determine whether any user devices are within a threshold range of the vehicle. In this case, assume that the scan fails to detect any user devices (e.g., the user may have forgotten to bring his or her phone with them into the vehicle).

In some cases, the infotainment system may provide, for display on the interface (e.g., the screen on the dashboard of the vehicle), a notification to the user asking if the user device has enabled a personal area network (PAN) connection, such as a Bluetooth connection. As such, the infotainment system is able to alert the user in situations where the user device is in fact in the vehicle but has Bluetooth capabilities turned off. In other cases, the user device may be configured to allow the infotainment system to automatically turn on Bluetooth capabilities (e.g., using a public network, such as the Internet).

As shown by reference number 230, the infotainment system may select an alternate authentication procedure based on determining that the scan failed. In some implementations, the infotainment system may be configured to select a particular authentication procedure if the scanning technique is unable to identify any user devices.

In some implementations, the infotainment system may be configured with multiple authentication procedures, and may select an authentication procedure based on one or more risk scores associated with real-time events. For example, each of the multiple authentication procedures may be stored in association with a risk score or a range of risk scores. In this case, the infotainment system may generate an overall risk score (e.g., after failing to detect the user device within the vehicle), and may select a particular authentication procedure associated with the overall risk score. The overall risk score may be based on a first risk score associated with a current location of the user device, a second risk score associated with detection of unregistered user devices within the vehicle, a third risk score associated with information obtained from a social media account of the authorized user, and/or the like.

For example, the infotainment system may identify a current geographic location of the user device (e.g., the user may opt in to location tracking of the user device), and the infotainment system may generate the first risk score based on the current geographic location. The first risk score may be premised on an assumption that the user device being in a safe location (e.g., a home of the authorized user) increases the likelihood of the user in the vehicle being an authorized user who has simply forgotten to bring his or her phone into the vehicle.

In this case, the infotainment system may identify that the user device is within a geographic location associated with a home of the authorized user, is within a geographic location of an area with which the user frequently travels (e.g., a home of a friend, a work office, a university, etc.), is within a geographic location in which the user infrequently travels, or is within a geographic location in which the user has yet to travel. Continuing with the example, if the user device is within the geographic location of the home of the authorized user, the infotainment system may generate a low risk score, if the user device is within the area with which the user frequently travels, the infotainment system may generate a low risk score, if the user device is within the geographic location in which the user infrequently travels, the infotainment system may generate a high risk score, and if the user device is within a geographic location in which the user has yet to travel, the infotainment system may generate a highest possible risk score.

As another example, the infotainment system may determine whether any unregistered user devices are within the vehicle, and may generate the second risk score based on the determination. In this case, while using the scanning technique that failed to detect a registered user device within the vehicle, the infotainment system may detect one or more unregistered user devices. If one or more unregistered devices are within the vehicle without any registered devices, the infotainment system may generate a high risk score.

As another example, the infotainment system may determine whether one or more social media accounts of the authorized user include information that increase or decrease a likelihood of the authorized user being the user within the vehicle, and may generate the risk score based on the determination. In this case, after the scanning technique fails to detect the registered user device within the vehicle, the infotainment system may obtain (e.g., query, mine, etc.) information from one or more social media accounts of the authorized user. Additionally, the infotainment system may execute one or more natural language processing techniques to analyze (e.g., parse, sort, etc.) the information to determine whether any of the information increases of decreases the likelihood of the authorized user being within the vehicle. As such, the infotainment system may use the information to generate a lower risk score or a higher risk score.

As a particular example, assume the authorized user loses her or her phone at a concert. Further assume the authorized user gets into the vehicle, and that the infotainment system is unable to detect the phone. In this case, the infotainment system may analyze information from a social media account of the authorized user to confirm that the user is at the concert, which increases a likelihood that the user in the vehicle is the authorized user. This may allow the infotainment system to generate a lower risk score.

In some implementations, the infotainment system may use the one or more risk scores to generate the overall risk score, which may be an average risk score, a weighted average risk score, or the like. In some implementations, the infotainment system may use the overall risk score to select an authentication procedure (e.g., an authentication procedure described in Fig. 2A, a similar authentication procedure, etc.).

As shown by reference number 235, the user may interact with the infotainment system to cause the infotainment system to generate user identification data. For example, the interface of the infotaimment system may display authentication instructions for the selected authentication procedure, which may cause the user to interact with the interface to provide the infotainment system with authentication data needed to satisfy the authentication instructions. Continuing with the previous examples, the authentication data may include data associated with the fingerprint of the user, data associated with one or more eyes of the user, data associated with the face of the user, data associated with a voice of the user, data relating to the valid form of user identification, and/or the like.

As shown by reference number 240, the infotainment system may provide the payment information, the merchant identifier, and/or the user identification data to the secure element. As shown by reference number 245, the secure element may authenticate the user identification data. For example, the secure element may compare the user identification data to the configured authentication data (e.g., as described in Fig. 2A). If the configured authentication data and the user identification data satisfy a threshold level of similarity with each other, the secure element may authenticate the user identification data.

As shown by reference number 250, the secure element may, after authenticating the user identification data, use a public key to encrypt the payment information, in a manner described in detail in Fig. IB.

In this way, the secure element is able to authenticate the user identification data and encrypt the payment information, despite that the user device of the authorized user is not within the vehicle.

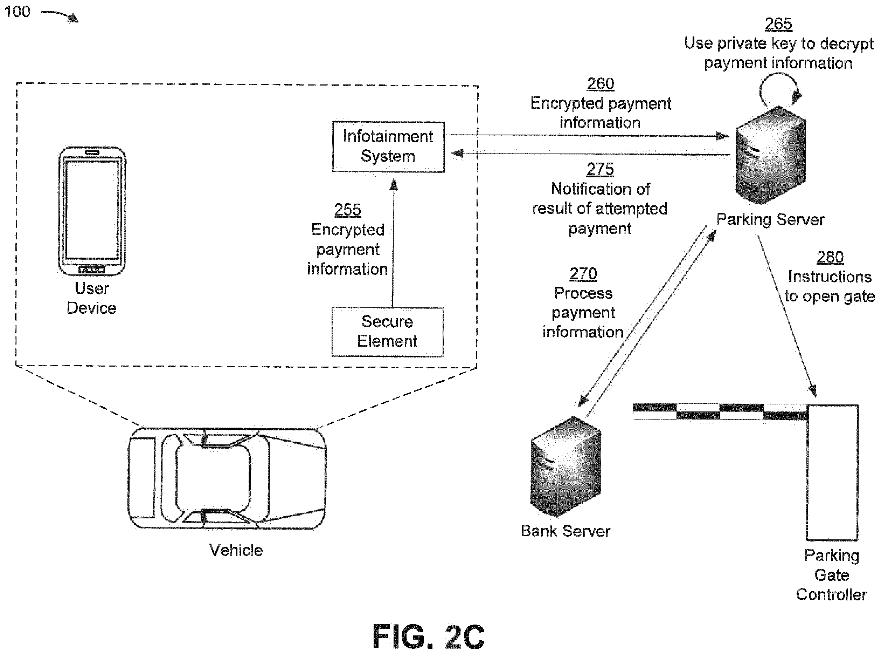

As shown in Fig. 2C, the secure element, the infotainment system, the parking server, a bank server, and/or a parking gate controller may interact to process the payment information and permit the vehicle to exit the parking area, as described in detail in Fig. 1C. For example, as shown by reference number 255, the secure element may provide encrypted payment information to the infotainment system. As shown by reference number 260, the infotainment system may provide the encrypted payment information to the parking server. As shown by reference number 265, the parking server may use a private key to decrypt the payment information.

As shown by reference number 270, the parking server may interact with the bank server to process the payment information. As shown by reference number 275, the parking server may provide, to the infotainment system, a notification of a result of an attempted payment. As shown by reference number 280, if the payment processed successfully, the parking server may provide instructions to the parking gate controller to open the gate to permit the vehicle to exit the parking area. In some cases, the parking gate may also be associated with a sensor that is able to capture the vehicle's license plate, as described elsewhere herein.

In some implementations, the secure element and/or the infotainment system may be used for making online purchases and/or payments. For example, a user may use the infotainment system or the user device to make an online purchase or a payment, and may do so by using the secure element to protect the payment information, using one or more of the steps or processes described above. In some cases, use of the secure element may allow the user to make a secure purchase from an unsecured website (e.g., a webpage using hypertext transfer protocol (HTTP) instead of HTTP secure (HTTPS).

In this way, the secure element permits secure in-vehicle payments, without the user needing to have cash on hand, a transaction card, and/or the like. Furthermore, by providing additional authentication procedures, the secure element and/or the infotainment system may provide secure transactions even when the user forgets to bring the registered user device into the vehicle, conserves processing resources that might be used to perform and/or resolve fraudulent transactions, and/or the like.

As indicated above, Figs. 2A-2C are provided merely as an example. Other examples are possible and may differ from what was described with regard to Figs. 2A-2C. For example, there may be additional devices and/or networks, fewer devices and/or networks, different devices and/or networks, or differently arranged devices and/or networks than those shown in Figs. 2A-2C. Furthermore, two or more devices shown in Figs. 2A-2C may be implemented within a single device, or a single device shown in Figs. 2A-2C may be implemented as multiple, distributed devices. Additionally, or alternatively, a set of devices (e.g., one or more devices) of example implementation 200 may perform one or more functions described as being performed by another set of devices of example implementation 200.

As an example, one or more implementations, described herein as being performed by the infotainment system, may be performed by the secure element. As another example, one or more implementations, described herein as being performed by the secure element, may be performed by the infotainment system. As another example, one or more implementations, described herein as being performed by the infotainment system or by the secure element, may be performed by a device that includes both the infotainment system and the secure element. As another example, one or more implementations, described herein as being performed by the infotainment system and/or the secure element, may be performed by the user device.

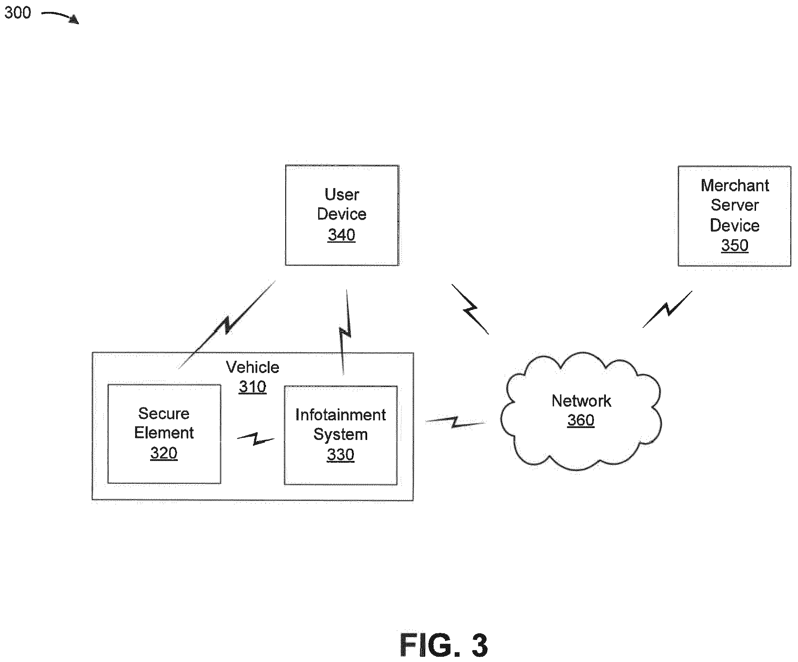

Fig. 3 is a diagram of an example environment 300 in which systems and/or methods, described herein, maybe implemented. As shown in Fig. 3, environment 300 may include a vehicle 310, a secure element 320, an infotainment system 330, a user device 340, a merchant server device 350, and/or a network 360. Devices of environment 300 may interconnect via wired connections, wireless connections, or a combination of wired and wireless connections.

Vehicle 310 includes one or more vehicles capable of driving to a particular destination. For example, vehicle 310 may include a car, a truck, a boat, a plane, a ship, a drone, an autonomous vehicle, and/or a similar type of vehicle. In some implementations, vehicle 310 may include one or more communication systems capable of supporting secure element 320 and/or infotainment system 330. For example, vehicle 310 may support a controller area network (CAN) bus, a personal area network (PAN), and/or any other communication systems and/or protocols that allow microcontrollers and applications within vehicle 310 to interact with each other (e.g., such as microcontrollers and applications associated with secure element 320 and/or infotainment system 330).

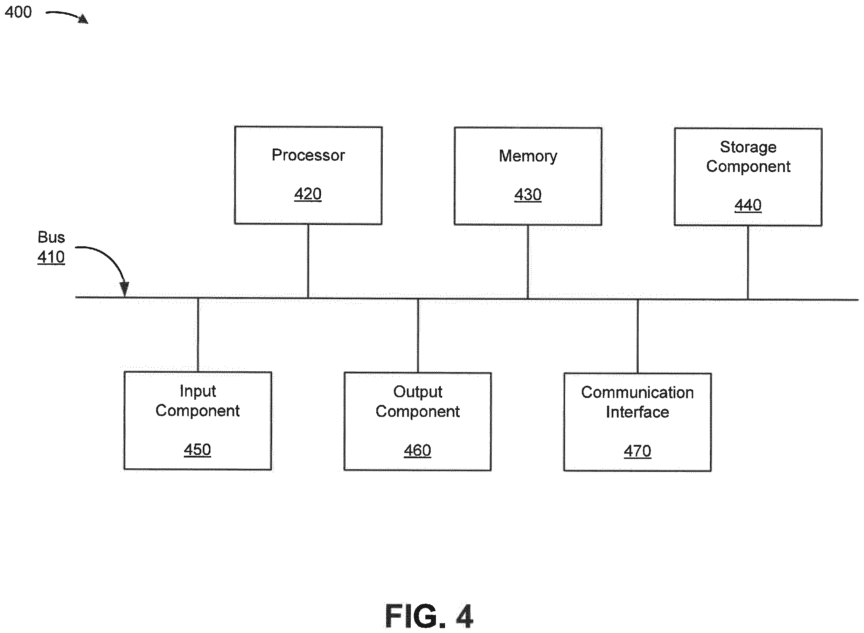

Secure element 320 includes one or more devices capable of receiving, storing, generating, processing, and/or providing information associated with paying for a service. For example, secure element 320 may include a computing device and/or a communication device, such as a smart device (e.g., a universal integrated circuit card (UICC), a micro secure digital (SD) card, an embedded UICC, an embedded micro SD card, etc.), a server device (e.g., a cloud-based server), and/or the like. In some implementations, one or more components of secure element 320 (e.g., components described in Fig. 4) may be tamper-resistant components.

In some implementations, secure element 320 may be supported within vehicle 310 in a location that is separate from infotainment system 330. In some implementations, secure element 320 may be supported within vehicle 310 as part of infotainment system 330. In some implementations, secure element 320 may be supported in vehicle 310 in a location that is not visible to a driver or to passengers within vehicle 310. In some implementations, secure element 320 may be supported by user device 340.

In some implementations, secure element 320 may receive, from infotainment system 303, user profile data, a merchant identifier, and/or authentication data. In some implementations, secure element 320 may generate and/or store cryptographic keys (e.g., public keys, private keys, etc.) that are to be used to secure payment information. In some implementations, secure element 320 may receive a device identifier associated with user device 340 and payment information for a transactions that needs to be protected. In some implementations, secure element 320 may use a public key to encrypt the payment information, and may provide the encrypted payment information to infotainment system 330.

Infotainment system 330 includes one or more devices and/or components capable of receiving, storing, generating, processing, and/or providing information associated with paying for a service. For example, infotainment system 330 may include a computing device and/or a communication device, such as a computer, a server device or group of server devices, and/or a similar type of device.

In some implementations, infotainment system 330 may be used to provide a user with in-vehicle navigation capabilities, access to a radio, a compact disc (CD), and/or a digital video disc (DVD), access to a temperature control, access to Bluetooth communication capabilities, and/or the like. In some implementations, a human machine interface (HMI) layer of infotainment system 330 may control display of an HMI head unit, may receive inputs from a user within vehicle 310 (e.g., a user may touch an interface, may speak a command, etc.), may process the inputs, and/or may provide outputs back to the user and/or to another device (e.g., a device outside of the vehicle, secure element 320, user device 340, etc.). In some implementations, infotainment system 330 may be used to install applications, create user profiles, configure authentication procedures, and/or the like.

User device 340 includes one or more devices capable of receiving, storing, generating, processing, and/or providing information associated with paying for a service. For example, user device 340 may include a communication and/or computing device, such as a phone (e.g., a mobile phone, such as a smartphone, a radiotelephone, etc.), a laptop computer, a tablet computer, a handheld computer, a gaming device, a wearable communication device (e.g., a smart wristwatch, a pair of smart eyeglasses, etc.), or a similar type of device. In some implementations, user device 340 may support personal area network (PAN) capabilities, such as Bluetooth. In some implementations, user device 340 may support applications that allow user device 340 to orchestrate payment for the service.

Merchant server device 350 includes one or more devices capable of receiving, storing, generating, processing, and/or providing information associated with paying for a service. For example, merchant server device 350 may include a server device or a group of server devices. In some implementations, merchant server device 350 may receive encrypted payment information from infotainment system 330 (e.g., by using network 360, such as the Internet, to make an application programming interface (API) call). In some implementations, merchant server device 350 may interact with a bank server device to process payment information.

In some implementations, merchant server device 350 may provide instructions to devices associated with the service to perform a particular action. For example, merchant server device 350 may provide instructions to a parking gate controller to instruct the parking gate controller to open the parking gate (e.g., to allow vehicle 310 to leave a parking area). In some implementations, merchant server device 350 may provide a notification to infotainment system 330 of a result of an attempted payment (e.g., receipt of a successful payment, notice of an unsuccessful payment, etc.).

Network 360 includes one or more wired and/or wireless networks. For example, network 360 may include a cellular network (e.g., a fifth generation (5G) network, a fourth generation (4G) network, such as a long-term evolution (LTE) network, a third generation (3G) network, a code division multiple access (CDMA) network, another type of advanced generated network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, a public area network (PAN), such as one enabling Bluetooth communication, and/or the like, and/or a combination of these or other types of networks.

The number and arrangement of devices and networks shown in Fig. 3 are provided as an example. In practice, there may be additional devices and/or networks, fewer devices and/or networks, different devices and/or networks, or differently arranged devices and/or networks than those shown in Fig. 3. Furthermore, two or more devices shown in Fig. 3 may be implemented within a single device, or a single device shown in Fig. 3 may be implemented as multiple, distributed devices. Additionally, or alternatively, a set of devices (e.g., one or more devices) of environment 300 may perform one or more functions described as being performed by another set of devices of environment 300.

Fig. 4 is a diagram of example components of a device 400. Device 400 may correspond to vehicle 310, secure element 320, infotainment system 330, user device 340, and/or merchant server device 350. In some implementations, vehicle 310, secure element 320, infotainment system 330, user device 340, and/or merchant server device 350 may include one or more devices 400 and/or one or more components of device 400. As shown in Fig. 4, device 400 may include a bus 410, a processor 420, a memory 430, a storage component 440, an input component 450, an output component 460, and a communication interface 470.

Bus 410 includes a component that permits communication among the components of device 400. Processor 420 is implemented in hardware, firmware, or a combination of hardware and software. Processor 420 is a central processing unit (CPU), a graphics processing unit (GPU), an accelerated processing unit (APU), a microprocessor, a microcontroller, a digital signal processor (DSP), a field-programmable gate array (FPGA), an application-specific integrated circuit (ASIC), a tamper-resistant processing component (e.g., a tamper-resistant microprocessor, a tamper-resistant microcontroller, etc.), or another type of processing component. In some implementations, processor 420 includes one or more processors capable of being programmed to perform a function. Memory 430 includes a random access memory (RAM), a read only memory (ROM), and/or another type of dynamic or static storage device (e.g., a flash memory, a magnetic memory, and/or an optical memory) that stores information and/or instructions for use by processor 420.

Storage component 440 stores information and/or software related to the operation and use of device 400. For example, storage component 440 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

Input component 450 includes a component that permits device 400 to receive information, such as via user input (e.g., a touch screen display, a keyboard, a keypad, a mouse, a button, a switch, and/or a microphone). Additionally, or alternatively, input component 450 may include a sensor for sensing information (e.g., a global positioning system (GPS) component, an accelerometer, a gyroscope, and/or an actuator). Output component 460 includes a component that provides output information from device 400 (e.g., a display, a speaker, and/or one or more light-emitting diodes (LEDs)).

Communication interface 470 includes a transceiver-like component (e.g., a transceiver and/or a separate receiver and transmitter) that enables device 400 to communicate with other devices, such as via a wired connection, a wireless connection, or a combination of wired and wireless connections. Communication interface 470 may permit device 400 to receive information from another device and/or provide information to another device. For example, communication interface 470 may include an Ethernet interface, an optical interface, a coaxial interface, an infrared interface, a radio frequency (RF) interface, a universal serial bus (USB) interface, a Wi-Fi interface, a cellular network interface, a controller area network (CAN) bus interface, a personal area network (PAN) interface, and/or the like.

Device 400 may perform one or more processes described herein. Device 400 may perform these processes based on processor 420 executing software instructions stored by a non-transitory computer-readable medium, such as memory 430 and/or storage component 440. A computer-readable medium is defined herein as a non-transitory memory device. A memory device includes memory space within a single physical storage device or memory space spread across multiple physical storage devices.

Software instructions may be read into memory 430 and/or storage component 440 from another computer-readable medium or from another device via communication interface 470. When executed, software instructions stored in memory 430 and/or storage component 440 may cause processor 420 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, device 400 may include additional components, fewer components, different components, or differently arranged components than those shown in Fig. 4. Additionally, or alternatively, a set of components (e.g., one or more components) of device 400 may perform one or more functions described as being performed by another set of components of device 400.

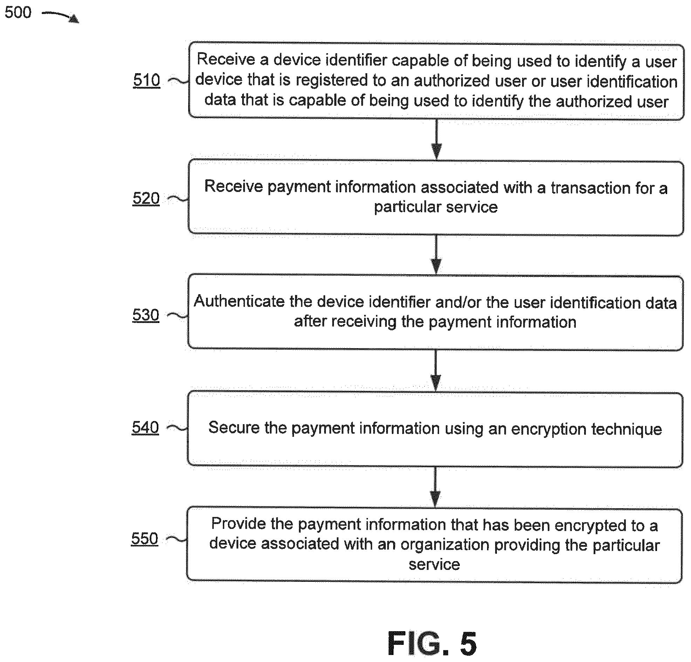

Fig. 5 is a flow chart of an example process 500 for using a secure element affixed to a vehicle to secure transactions that are made within the vehicle. In some implementations, one or more process blocks of Fig. 5 may be performed by secure element 320. In some implementations, one or more process blocks of Fig. 5 may be performed by another device or a group of devices separate from or including secure element 320, such as vehicle 310, infotainment system 330, user device 340, and/or merchant server device 350.

As shown in Fig. 5, process 500 may include receiving a device identifier capable of being used to identify a user device that is registered to an authorized user or user identification data capable of being used to identify the authorized user (block 510). For example, a device associated with a vehicle (e.g., secure element 320 and/or infotainment system 330, using processor 420, input component 450, etc.) may receive a device identifier capable of being used to identify a user device (e.g., user device 340) that is registered to an authorized user or user identification data capable of being used to identify the authorized user, as described, for example, in connection with Figs. 1A-1C and/or Figs. 2A-2C above.

As shown in Fig. 5, process 500 may include receiving payment information associated with a transaction for a particular service (block 520). For example, the device associated with the vehicle (e.g., secure element 320 and/or infotainment system 330, using processor 420, input component 450, etc.) may receive payment information associated with a transaction for a particular service, as described, for example, in connection with Figs. 1A-1C and/or Figs. 2A-2C above.

As shown in Fig. 5, process 500 may include authenticating the device identifier and/or the user identification data after receiving the payment information (block 530). For example, the device associated with the vehicle (e.g., secure element 320 and/or infotainment system 330, using processor 420, etc.) may authenticate the device identifier and/or the user identification data after receiving the payment information, as described, for example, in connection with Figs. 1A-1C and/or Figs. 2A-2C above.

As shown in Fig. 5, process 500 may include securing the payment information using an encryption technique (block 540). For example, the device associated with the vehicle (e.g., secure element 320 and/or infotainment system 330, using processor 420, etc.) may secure the payment information using an encryption technique that is to use a public key associated with the device identifier or the user identification data to encrypt the payment information, as described, for example, in connection with Figs. 1A-1C and/or Figs. 2A-2C above.

As shown in Fig. 5, process 500 may include providing the payment information that has been encrypted to a device associated with an organization providing the particular service (block 550). For example, the device associated with the vehicle (e.g., secure element 320 and/or infotainment system 330, using processor 420, output component 460, etc.) may provide the payment information that has been encrypted to a device associated with an organization providing the particular service (e.g., merchant server device 350), as described, for example, in connection with Figs. 1A-1C and/or Figs. 2A-2C above. In some cases, providing the payment information may cause the device associated with the organization providing the particular service to use a private key to decrypt the payment information, process the payment information, and/or perform one or more actions relating to the particular service based on the payment information being successfully processed.

Process 500 may include additional implementations, such as any single implementation or any combination of implementations described below.

In some implementations, the device associated with the vehicle may include a secure element that is affixed to the vehicle. In some cases, the secure element may be affixed to the vehicle in a location that is not visible to passengers sitting in the vehicle. Additionally, or alternatively, the device associated with the vehicle may include the infotainment system.

In some implementations, the device associated with the vehicle may receive, prior to receiving the device identifier or the user identification data, user profile data associated with the authorized user and a merchant identifier associated with an organization providing the service. In this case, the authorized user may interact with an interface of the infotainment system to input the user profile data. The user profile data may include the device identifier for the user device and configured user identification data that is capable of being used to identify the authorized user. In some cases, the infotainment system may obtain the public key from a server device, and may provide the user profile data and the public key to the device associated with the vehicle. Additionally, the device associated with the vehicle may store the public key in a manner that associates the public key with the user profile data.

In some implementations, the device associated with the vehicle may provide the user device with a request for the device identifier and for a security code. The user device may be configured to generate the security code if the user device is utilizing a secure login mechanism. The request may cause the user device to provide the device associated with the vehicle with the device identifier and the security code if the user device is utilizing the secure login mechanism. Additionally, the device associated with the vehicle may authenticate the user device. For example, the device associated with the vehicle may determine that the device identifier matches a sntifier associated with the user device, and may determine that the security code matches a configured security code. Additionally, the device associated with the vehicle may use the public key to encrypt the payment information based on authenticating the user device.

In some implementations, the device associated with the vehicle may receive data describing one or more responses to one or more authentication questions. For example, the authorized user may interact with an interface of the infotainment system to input the one or more responses to the one or more authentication questions to cause the infotainment system to provide the data describing the one or more responses to the one or more authentication questions to the device associated with the vehicle. Additionally, the device associated with the vehicle may authenticate the data describing the one or more responses by determining that the data describing the one or more responses satisfies a threshold level of similarity with data describing one or more configured responses. Additionally, the device associated with the vehicle may use the public key to encrypt the payment information based on authenticating the data describing the one or more responses to the authentication questions.

In some implementations, the device associated with the vehicle may receive the user identification data. The user identification data may include data identifying a fingerprint of the authorized user, data identifying a face of the authorized user, data identifying an eye of the authorized user, and/or data relating to a valid form of user identification. In some cases, the user identification data may be received from the infotainment system. Additionally, the device associated with the vehicle may authenticate the user identification data by determining that the user identification data satisfies a threshold level of similarity with configured user identification data. Additionally, the device associated with the vehicle may use the public key to encrypt the payment information based on validating the user identification data.

In some implementations, the device associated with the vehicle may determine, after receiving the device identifier, that the device identifier does not match with a configured device identifier for the user device. Additionally, the device associated with the vehicle may provide, to the infotainment system, an indication that the device identifier does not match with the configured device identifier. The indication may cause the infotainment system to display authentication instructions for an alternate authentication procedure that is to be used to authenticate the authorized user. The device associated with the vehicle may receive, from the infotainment system, the user identification data as part of the alternate authentication procedure. The device associated with the vehicle may authenticate the user identification data by determining that the user identification data satisfies a threshold level of similarity with configured user identification data.

In some implementations, the device associated with the vehicle may scan a geographic area that is within a threshold distance of the vehicle. The scan may detect a location of the user device and one or more additional locations of one or more additional user devices. Additionally, the device associated with the vehicle may select the user device, over the one or more additional user devices, as a device that is to be used to charge the authorized user for the particular service. The user device may be selected based on being closer to a particular location within the geographic area than the one or more additional user devices. Additionally, the device associated with the vehicle may provide the user device with a request for the device identifier based on selecting the user device, which may cause the user device to provide the device identifier to the device associated with the vehicle.

In some implementations, the device associated with the vehicle may scan a geographic area that is within a threshold distance of the vehicle. The scan may detect the user device and one or more additional user devices. Additionally, the device associated with the vehicle may select the user device, over the one or more additional user devices, as a device that is to be used to charge the authorized user for the particular service. The user device may be selected based on a rule. Additionally, the device associated with the vehicle may provide the user device with a request for the device identifier, which may cause the user device to provide the device identifier to the device associated with the vehicle.

In some implementations, the device associated with the vehicle may scan a geographic area that is within a threshold distance of the vehicle, and the scan my fail. Additionally, the device associated with the vehicle may provide, for display on an interface within the vehicle, authentication instructions for an alternate authentication procedure that is to be used to authenticate the authorized user. Additionally, the device associated with the vehicle may receive the user identification data based on the authorized user interacting with the interface within the vehicle.

In some implementations, the device associated with the vehicle may receive, from the device associated with the organization providing the particular service, an indication that the payment information was successfully processed. In this case, the device associated with the organization providing the particular service may cause a parking gate to open to allow the vehicle to depart from a designated parking area.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

In this way, the secure element is able to provide security to in-vehicle payments that allow the user to pay for a service without the user needing to have cash on hand, a transaction card (e.g., a credit card, a debit card), and/or the like. In some cases, the secure element may be located within the vehicle in a location that is not visible to users sitting inside the vehicle. This further reduces a likelihood of the secure element being tampered with and further proves security. Additionally, use of the secure element eliminates a need for merchant servers to devote resources to implement their own data security measures, conserves processing resources that might otherwise be used to perform fraudulent transactions and/or resolve fraudulent transactions, and/or the like. Moreover, automation of several different stages of the process of paying for parking may remove human subjectivity and waste from the process, which may improve speed and efficiency of the process while conserving computing resources (e.g., processing resources, memory resources, and/or the like).

The foregoing disclosure provides illustration and description, but is not intended to be exhaustive or to limit the implementations to the precise form disclosed. Modifications and variations are possible in light of the above disclosure or may be acquired from practice of the implementations.

As used herein, the term component is intended to be broadly construed as hardware, firmware, or a combination of hardware and software.

Some implementations are described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, or the like.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware can be designed to implement the systems and/or methods based on the description herein.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Furthermore, as used herein, the term "set" is intended to include one or more items (e.g., related items, unrelated items, a combination of related and unrelated items, etc.), and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

In view of the above, the present application may disclose the following items:
Item 1. A device associated with a vehicle, comprising:
   one or more memories; and
   one or more processors, communicatively coupled to the one or more memories, to:
      receive, from an infotainment system:
         a device identifier capable of being used to identify a user device that is registered to an authorized user, or
         user identification data capable of being used to identify the authorized
         user;
      receive, from the infotainment system, payment information associated with a transaction for a particular service;
      secure the payment information using an encryption technique that is to:
         use a public key that is associated with the device identifier to encrypt the payment information, or
         use the public key that is associated with the user identification data to encrypt the payment information; and
      provide the payment information that has been encrypted to the infotainment system to cause the infotainment system to provide the payment information to a device associated with an organization providing the particular service,
         wherein the device associated with the organization providing the particular service is to use a private key to decrypt the payment information,
         wherein the device associated with the organization providing the particular service is to process the payment information that has been decrypted, and
         wherein the device associated with the organization providing the particular service is to perform one or more actions relating to the particular service based on the payment information being successfully processed.
Item 2. The device of item 1, wherein the one or more processors are part of a secure element that is affixed to the vehicle.
Item 3. The device of item1 or 2, wherein the one or more processors are further to:
   receive, prior to receiving the device identifier or the user identification data, user profile data associated with the authorized user and a merchant identifier associated with the organization providing the particular service,
      wherein the authorized user is to interact with an interface of the infotainment system to input the user profile data, and
      wherein the user profile data includes the device identifier for the user device and configured user identification data that is capable of being used to identify the authorized user;
   generate the public key after receiving the user profile data; and store the public key in a manner that associates the public key with the user profile data and the merchant identifier.
Item 4. The device of any one of the preceding items, wherein the one or more processors, when receiving the device identifier or the user identification data, are to:
   provide the user device with a request for the device identifier and for a security code,
      wherein the user device is configured to generate the security code if the user device is utilizing a secure login mechanism, and
      wherein the request causes the user device to provide the device associated with the vehicle with the device identifier and the security code if the user device is utilizing the secure login mechanism;
   wherein the one or more processors are further to:
      authenticate the user device,
      wherein the one or more processors, when authenticating the user device, are to:
         determine that the device identifier matches a configured device identifier associated with the user device, and
         determine that the security code matches a configured security code; and wherein the one or more processors, when securing the payment information, are to:
      use the public key to encrypt the payment information based on authenticating the user device.
Item 5. The device of any one of the preceding items, wherein the one or more processors, when receiving the device identifier or the user identification data, are to:
   receive data describing one or more responses to one or more authentication questions, and
      wherein the authorized user is to interact with an interface of the infotainment system to input the one or more responses to the one or more authentication questions to cause the infotainment system to provide the data describing the one or more responses to the one or more authentication questions to the device associated with the vehicle;
   wherein the one or more processors are further to:
      authenticate the data describing the one or more responses by determining that the data describing the one or more responses satisfies a threshold level of similarity
      with data describing one or more configured responses; and
   wherein the one or more processors, when securing the payment information, are to:
      use the public key to encrypt the payment information based on authenticating the data describing the one or more responses to the authentication questions.
Item 6. The device of any one of the preceding items, wherein the one or more processors, when receiving the device identifier or the user identification data, are to:
   receive the user identification data,
      wherein the user identification data includes at least one of:
      data identifying a fingerprint of the authorized user,
      data identifying a face of the authorized user,
      data identifying an eye of the authorized user, or
      data relating to a valid form of user identification;
   wherein the one or more processors are further to:
      authenticate the user identification data by determining that the user identification data satisfies a threshold level of similarity with configured user identification data; and
   wherein the one or more processors, when securing the payment information, are to:
      use the public key to encrypt the payment information based on validating the user identification data.
Item 7. The device of any one of the preceding items, wherein the one or more processors are further to:
   determine, after receiving the device identifier, that the device identifier does not match with a configured device identifier for the user device;
   provide, to the infotainment system, an indication that the device identifier does not match with the configured device identifier,
      wherein the indication is to cause the infotainment system to display authentication instructions for an alternate authentication procedure that is to be used to authenticate the authorized user;
   receive, from the infotainment system, the user identification data as part of the alternate authentication procedure; and
   authenticate the user identification data by determining that the user identification data satisfies a threshold level of similarity with configured user identification data.
Item 8. A non-transitory computer-readable medium storing instructions, the instructions comprising:
   one or more instructions that, when executed by one or more processors associated with a vehicle, cause the one or more processors to:
   receive at least one of:
      a device identifier capable of being used to identify a user device that is registered to an authorized user, or
      user identification data capable of being used to identify the authorized user;
   receive payment information associated with a transaction for a particular service;
   authenticate at least one of the device identifier or the user identification data after receiving the payment information;
   secure the payment information using an encryption technique that is to:
      use a public key to encrypt the payment information,
      wherein the public key is associated with at least one of:
         the device identifier, or
         the user identification data; and
      provide the payment information that has been encrypted to a device associated with an organization providing the particular service,
         wherein the device associated with the organization providing the particular service is to use a private key to decrypt the payment information,
         wherein the device associated with the organization providing the particular service is to process the payment information that has been decrypted, and
         wherein the device associated with the organization providing the particular service is to perform one or more actions relating to the particular service based on the payment information being successfully processed.
Item 9. The non-transitory computer-readable medium of item 8, wherein the one or more processors are part of an infotainment system that includes a secure element that is affixed to the vehicle.
Item 10. The non-transitory computer-readable medium of item 8 or 9, wherein the one or more instructions, when executed by the one or more processors, further cause the one or more processors to:
   scan a geographic area that is within a threshold distance of the vehicle,
      wherein the scan is to detect a location of the user device and one or more additional locations of one or more additional user devices;
   select the user device, over the one or more additional user devices, as a device that is to be used to charge the authorized user for the particular service,
      wherein the user device is selected based on being closer to a particular location within the geographic area than the one or more additional user devices; and
   wherein the one or more instructions, that cause the one or more processors to receive the device identifier or the user identification data, cause the one or more processors to:
      provide the user device with a request for the device identifier based on selecting the user device,
      wherein the user device is to provide the device identifier to the one or more processors.
Item 11. The non-transitory computer-readable medium of any one of items 8 to 10, wherein the one or more instructions, when executed by the one or more processors, further cause the one or more processors to:
   scan a geographic area that is within a threshold distance of the vehicle,
      wherein the scan fails to detect the user device;
   provide, for display on an interface within the vehicle, authentication instructions for an alternate authentication procedure that is to be used to authenticate the authorized user;
   and
   wherein the one or more instructions, that cause the one or more processors to receive the device identifier or the user identification data, cause the one or more processors to:
      receive the user identification data based on the authorized user interacting with the interface within the vehicle.
Item 12. The non-transitory computer-readable medium of any one of items 8 to 11, wherein the one or more instructions, that cause the one or more processors to receive the device identifier or the user identification data, cause the one or more processors to:
   receive the user identification data,
      wherein the user identification data includes data describing one or more responses to one or more authentication questions;
   wherein the one or more instructions, that cause the one or more processors to authenticate the device identifier or the user identification data, cause the one or more processors to:
      authenticate the data describing the one or more responses by determining that the data describing the one or more responses satisfies a threshold level of similarity with data describing one or more configured responses; and
   wherein the one or more instructions, that cause the one or more processors to secure the payment information, cause the one or more processors to:
      use the public key to encrypt the payment information based on authenticating the data describing the one or more responses to the authentication questions.
Item 13. The non-transitory computer-readable medium of any one of items 8 to 12, where the one or more instructions, that cause the one or more processors to receive the device identifier or the user identification data, cause the one or more processors to:
   receive the user identification data,
      wherein the user identification data is provided to the one or more processors through an interface of an infotainment system of the vehicle, and
      wherein the user identification data includes at least one of:
         data identifying a fingerprint of the authorized user,
         data identifying a face of the authorized user,
         data identifying an eye of the authorized user, or
         data associated with a valid form of user identification.
Item 14. A method, comprising:
   receiving, by a device associated with a vehicle:
      a device identifier capable of being used to identify a user device that is registered to an authorized user, or
      user identification data capable of being used to identify the authorized user,
      wherein the device includes a secure element that is capable of securing transactions;
   receiving, by the device and from an infotainment system of the vehicle, payment information associated with a transaction for a particular service;
   securing, by the device, the payment information using an encryption technique that is to:
      use a public key that is associated with the device identifier to encrypt the payment information, or
      use the public key that is associated with the user identification data to encrypt the payment information; and
   providing, by the device, the payment information that has been encrypted to the infotainment system associated with the vehicle to cause the infotainment system to provide the payment information to a device associated with an organization providing the particular service,
      wherein the device associated with the organization providing the particular service is to use a private key to decrypt the payment information,
      wherein the device associated with the organization providing the particular service is to process the payment information that has been decrypted, and
      wherein the device associated with the organization providing the particular service is to perform one or more actions relating to the particular service based on the payment information being successfully processed.
Item 15. The method of item 14, wherein the device that includes the secure element is affixed to the vehicle in a location that is not visible to passengers sitting in the vehicle.
Item 16. The method of item 14 or 15, further comprising:
   storing, prior to receiving the device identifier or the user identification data, the public key in a manner that associates the public key with user profile data associated with the authorized user,
      wherein the user profile data includes a configured device identifier associated with the user device and configured user identification data that is capable of being used to identify the authorized user; and
   authenticating, before securing the payment information, the device identifier or the user identification data using the user profile data.
Item 17. The method of any one of items 14 to 16, further comprising:
   scanning a geographic area that is within a threshold distance of the vehicle,
      wherein the scan is to detect the user device and one or more additional user devices;
   selecting the user device, over the one or more additional user devices, as a device that is to be used to charge the authorized user for the particular service,
      wherein the user device is selected based on a rule; and
   wherein receiving the device identifier or the user identification data comprises:
      providing the user device with a request for the device identifier to cause the user device to provide the device identifier to the device.
Item 18. The method of any one of items 14 to 17, wherein receiving the device identifier or the user identification data comprises:
   providing, to the user device, a request for the device identifier, to cause the user device to provide the device with the device identifier;
   the method further comprising:
      authenticating the device identifier by determining that the device identifier matches a configured device identifier associated with the user device; and
   wherein securing the payment information comprises:
      using the public key to encrypt the payment information based on determining that the device identifier matches the configured device identifier.
Item 19. The method of any one of items 14 to 18, wherein providing the request for the device identifier comprises:
   providing the user device with the request for the device identifier,
      wherein the request includes a request for a security code, and
      wherein the request causes the user device to provide the device with the security code if the user device is utilizing a secure login mechanism;
   wherein authenticating the user device comprises:
      authenticating the security code by determining that the security code matches a configured security code; and
   wherein securing the payment information comprises:
      using the public key to encrypt the payment information based on determining that the device identifier matches the configured device identifier and based on determining that the security code matches the configured security code.
Item 20. The method of any one of items 14 to 19, wherein the particular service is a parking service; and
   wherein the method further comprises:
   receiving, from the device associated with the organization providing the particular service, an indication that the payment information was successfully processed,
   wherein the device associated with the organization providing the particular service causes a parking gate to open to allow the vehicle to depart from a designated parking area.

## Claims

1. A device associated with a vehicle, comprising:
one or more memories; and
one or more processors, communicatively coupled to the one or more memories, to:
receive, from an infotainment system:
a device identifier capable of being used to identify a user device that is registered to an authorized user, or
user identification data capable of being used to identify the authorized user;
receive, from the infotainment system, payment information associated with a transaction for a particular service;
secure the payment information using an encryption technique that is to:
use a public key that is associated with the device identifier to encrypt the payment information, or
use the public key that is associated with the user identification data to encrypt the payment information; and
provide the payment information that has been encrypted to the infotainment system to cause the infotainment system to provide the payment information to a device associated with an organization providing the particular service,
wherein the device associated with the organization providing the particular service is to use a private key to decrypt the payment information,
wherein the device associated with the organization providing the particular service is to process the payment information that has been decrypted, and
wherein the device associated with the organization providing the particular service is to perform one or more actions relating to the particular service based on the payment information being successfully processed.

2. The device of claim 1, wherein the one or more processors are part of a secure element that is affixed to the vehicle.

3. The device of claim 1 or 2, wherein the one or more processors are further to:
receive, prior to receiving the device identifier or the user identification data, user profile data associated with the authorized user and a merchant identifier associated with the organization providing the particular service,
wherein the authorized user is to interact with an interface of the infotainment system to input the user profile data, and
wherein the user profile data includes the device identifier for the user device and user identification data that is capable of being used to identify the authorized user;
generate the public key after receiving the user profile data; and
store the public key in a manner that associates the public key with the user profile data and the merchant identifier.

4. The device of any one of the preceding claims, wherein the one or more processors, when receiving the device identifier or the user identification data, are to:
provide the user device with a request for the device identifier and for a security code,
wherein the user device is configured to generate the security code if the user device is utilizing a secure login mechanism, and
wherein the request causes the user device to provide the device associated with the vehicle with the device identifier and the security code if the user device is utilizing the secure login mechanism;
wherein the one or more processors are further to:
authenticate the user device,
wherein the one or more processors, when authenticating the user device, are to:
determine that the device identifier matches a device identifier associated with the user device, and
determine that the security code matches a security code; and
wherein the one or more processors, when securing the payment information, are to:
use the public key to encrypt the payment information based on authenticating the user device.

5. The device of any one of the preceding claims, wherein the one or more processors, when receiving the device identifier or the user identification data, are to:
receive data describing one or more responses to one or more authentication questions, and
wherein the authorized user is to interact with an interface of the infotainment system to input the one or more responses to the one or more authentication questions to cause the infotainment system to provide the data describing the one or more responses to the one or more authentication questions to the device associated with the vehicle;
wherein the one or more processors are further to:
authenticate the data describing the one or more responses by determining that the data describing the one or more responses satisfies a threshold level of similarity with data describing one or more configured responses; and
wherein the one or more processors, when securing the payment information, are to:
use the public key to encrypt the payment information based on authenticating the
data describing the one or more responses to the authentication questions; and/or
when receiving the device identifier or the user identification data, are to:
receive the user identification data,
wherein the user identification data includes at least one of:
data identifying a fingerprint of the authorized user,
data identifying a face of the authorized user,
data identifying an eye of the authorized user, or
data relating to a valid form of user identification;
wherein the one or more processors are further to:
authenticate the user identification data by determining that the user identification data satisfies a threshold level of similarity with user identification data; and wherein the one or more processors, when securing the payment information, are to:
use the public key to encrypt the payment information based on validating the user identification data.

6. The device of any one of the preceding claims, wherein the one or more processors are further to:
determine, after receiving the device identifier, that the device identifier does not match with a device identifier for the user device;
provide, to the infotainment system, an indication that the device identifier does not match with the device identifier,
wherein the indication is to cause the infotainment system to display authentication instructions for an alternate authentication procedure that is to be used to authenticate the authorized user;
receive, from the infotainment system, the user identification data as part of the alternate authentication procedure; and
authenticate the user identification data by determining that the user identification data satisfies a threshold level of similarity with user identification data.

7. A non-transitory computer-readable medium storing instructions, the instructions comprising:
one or more instructions that, when executed by one or more processors associated with a vehicle, cause the one or more processors to:
receive at least one of:
a device identifier capable of being used to identify a user device that is registered to an authorized user, or
user identification data capable of being used to identify the authorized user;
receive payment information associated with a transaction for a particular service;
authenticate at least one of the device identifier or the user identification data after receiving the payment information;
secure the payment information using an encryption technique that is to:
use a public key to encrypt the payment information,
wherein the public key is associated with at least one of:
the device identifier, or
the user identification data; and
provide the payment information that has been encrypted to a device associated with an organization providing the particular service,
wherein the device associated with the organization providing the particular service is to use a private key to decrypt the payment information,
wherein the device associated with the organization providing the particular service is to process the payment information that has been decrypted, and
wherein the device associated with the organization providing the particular service is to perform one or more actions relating to the particular service based on the payment information being successfully processed.

8. The non-transitory computer-readable medium of claim 7, wherein the one or more processors are part of an infotainment system that includes a secure element that is affixed to the vehicle.

9. The non-transitory computer-readable medium of claim 7 or 8, wherein the one or more instructions, when executed by the one or more processors, further cause the one or more processors to:
scan a geographic area that is within a threshold distance of the vehicle, wherein the scan is to detect a location of the user device and one or more additional locations of one or more additional user devices;
select the user device, over the one or more additional user devices, as a device that is to be used to charge the authorized user for the particular service,
wherein the user device is selected based on being closer to a particular location within the geographic area than the one or more additional user devices; and
wherein the one or more instructions, that cause the one or more processors to receive the device identifier or the user identification data, cause the one or more processors to:
provide the user device with a request for the device identifier based on selecting the user device,
wherein the user device is to provide the device identifier to the one or more processors; and/or
wherein the one or more instructions, when executed by the one or more processors, further cause the one or more processors to:
scan a geographic area that is within a threshold distance of the vehicle, wherein the scan fails to detect the user device;
provide, for display on an interface within the vehicle, authentication instructions for an alternate authentication procedure that is to be used to authenticate the authorized user;
and
wherein the one or more instructions, that cause the one or more processors to receive the device identifier or the user identification data, cause the one or more processors to:
receive the user identification data based on the authorized user interacting with the interface within the vehicle.

10. The non-transitory computer-readable medium of any one of claims 7 to 9, wherein the one or more instructions, that cause the one or more processors to receive the device identifier or the user identification data, cause the one or more processors to:
receive the user identification data,
wherein the user identification data includes data describing one or more responses to one or more authentication questions;
wherein the one or more instructions, that cause the one or more processors to authenticate the device identifier or the user identification data, cause the one or more processors to:
authenticate the data describing the one or more responses by determining that the data describing the one or more responses satisfies a threshold level of similarity with data describing one or more configured responses; and
wherein the one or more instructions, that cause the one or more processors to secure the payment information, cause the one or more processors to:
use the public key to encrypt the payment information based on authenticating the
data describing the one or more responses to the authentication questions;
and/or
where the one or more instructions, that cause the one or more processors to receive the device identifier or the user identification data, cause the one or more processors to:
receive the user identification data,
wherein the user identification data is provided to the one or more processors through an interface of an infotainment system of the vehicle, and
wherein the user identification data includes at least one of:
data identifying a fingerprint of the authorized user,
data identifying a face of the authorized user,
data identifying an eye of the authorized user, or
data associated with a valid form of user identification.

11. A method, comprising:
receiving, by a device associated with a vehicle:
a device identifier capable of being used to identify a user device that is registered to an authorized user, or
user identification data capable of being used to identify the authorized user,
wherein the device includes a secure element that is capable of securing transactions;
receiving, by the device and from an infotainment system of the vehicle, payment information associated with a transaction for a particular service;
securing, by the device, the payment information using an encryption technique that is to:
use a public key that is associated with the device identifier to encrypt the payment information, or
use the public key that is associated with the user identification data to encrypt the payment information; and
providing, by the device, the payment information that has been encrypted to the infotainment system associated with the vehicle to cause the infotainment system to provide the payment information to a device associated with an organization providing the particular service,
wherein the device associated with the organization providing the particular service is to use a private key to decrypt the payment information,
wherein the device associated with the organization providing the particular service is to process the payment information that has been decrypted, and
wherein the device associated with the organization providing the particular service is to perform one or more actions relating to the particular service based on the payment information being successfully processed.

12. The method of claim 11, wherein the device that includes the secure element is affixed to the vehicle in a location that is not visible to passengers sitting in the vehicle.

13. The method of claim 11 or 12, further comprising:
storing, prior to receiving the device identifier or the user identification data, the public key in a manner that associates the public key with user profile data associated with the authorized user,
wherein the user profile data includes a device identifier associated with the user device and user identification data that is capable of being used to identify the authorized user; and
authenticating, before securing the payment information, the device identifier or the user identification data using the user profile data;
and/or
further comprising:
scanning a geographic area that is within a threshold distance of the vehicle,
wherein the scan is to detect the user device and one or more additional user devices;
selecting the user device, over the one or more additional user devices, as a device that is to be used to charge the authorized user for the particular service,
wherein the user device is selected based on a rule; and
wherein receiving the device identifier or the user identification data comprises:
providing the user device with a request for the device identifier to cause the user device to provide the device identifier to the device.

14. The method of any one of claims 11 to 13, wherein receiving the device identifier or the user identification data comprises:
providing, to the user device, a request for the device identifier, to cause the user device to provide the device with the device identifier;
the method further comprising:
authenticating the device identifier by determining that the device identifier
matches a device identifier associated with the user device; and
wherein securing the payment information comprises:
using the public key to encrypt the payment information based on determining
that the device identifier matches the device identifier;
wherein providing the request for the device identifier optionally comprises:
providing the user device with the request for the device identifier,
wherein the request includes a request for a security code, and
wherein the request causes the user device to provide the device with the security code if the user device is utilizing a secure login mechanism;
wherein authenticating the user device comprises:
authenticating the security code by determining that the security code matches a security code; and
wherein securing the payment information comprises:
using the public key to encrypt the payment information based on determining that the device identifier matches the device identifier and based on determining that the security code matches the security code.

15. The method of any one of claim 11 to 14, wherein the particular service is a parking service; and
wherein the method further comprises:
receiving, from the device associated with the organization providing the particular service, an indication that the payment information was successfully processed,
wherein the device associated with the organization providing the particular service causes a parking gate to open to allow the vehicle to depart from a designated parking area.
